(19) Europäisches Patentamt / European Patent Office / Office européen des brevets

(11) **EP 3 189 582 B1**

## (12) EUROPÄISCHE PATENTSCHRIFT

(45) Veröffentlichungstag und Bekanntmachung des Hinweises auf die Patenterteilung:
**25.12.2019 Patentblatt 2019/52**

(21) Anmeldenummer: **15781891.5**

(22) Anmeldetag: **07.10.2015**

(51) Int Cl.:
*H02K 1/00* *(2006.01)*

(86) Internationale Anmeldenummer:
**PCT/EP2015/073150**

(87) Internationale Veröffentlichungsnummer:
**WO 2016/066389 (06.05.2016 Gazette 2016/18)**

(54) **ROTOR EINER ELEKTRISCHEN MASCHINE, ELEKTRISCHE MASCHINE UND VERFAHREN ZUM HERSTELLEN EINES ROTORS EINER ELEKTRISCHEN MASCHINE**

ROTOR FOR AN ELECTRIC MACHINE, ELECTRIC MACHINE AND METHOD FOR PRODUCING A ROTOR OF AN ELECTRIC MACHINE.

ROTOR D'UNE MACHINE ÉLECTRIQUE, MACHINE ÉLECTRIQUE ET PROCÉDÉ DE FABRICATION DU ROTOR D'UNE MACHINE ÉLECTRIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.10.2014 DE 102014222044**

(43) Veröffentlichungstag der Anmeldung:
**12.07.2017 Patentblatt 2017/28**

(73) Patentinhaber: **Volkswagen Aktiengesellschaft 38440 Wolfsburg (DE)**

(72) Erfinder:
• **JELDEN, Hanno**
  **38518 Gifhorn (DE)**
• **TIMM, Eike, Hermann**
  **38108 Braunschweig (DE)**
• **BUDDE, Thomas**
  **30169 Hannover (DE)**

(56) Entgegenhaltungen:

JP-A- 2004 180 491      US-A1- 2009 224 619
US-A1- 2010 052 466      US-B2- 6 707 209

• FEI W ET AL: "A new technique of cogging torque suppression in direct-drive permanent magnet brushless machines", ELECTRIC MACHINES AND DRIVES CONFERENCE, 2009. IEMDC '09. IEEE INTERNATIONAL, IEEE, PISCATAWAY, NJ, USA, 3. Mai 2009 (2009-05-03), Seiten 9-16, XP031475744, ISBN: 978-1-4244-4251-5
• GULEC MEHMET ET AL: "Magnet asymmetry in reduction of cogging torque for integer slot axial flux permanent magnet motors", IET ELECTRIC POWER APPLICATIONS, IET, UK, Bd. 8, Nr. 5, 1. Mai 2014 (2014-05-01), Seiten 189-198, XP006047068, ISSN: 1751-8660, DOI: 10.1049/IET-EPA.2013.0256

**Beschreibung**

Die Erfindung betrifft einen Rotor für eine elektrische Maschine, eine elektrische Maschine mit einem solchen Rotor und ein Verfahren zum Herstellen eines solchen Rotors für eine elektrische Maschine.

Elektrische Maschinen weisen üblicherweise einen Rotor und einen Stator auf, die auf unterschiedliche Weise aufgebaut sein können. So können magnetische Komponenten im Stator bzw. im Rotor gleichmäßig ausgeführte Schrägungen aufweisen. Beispielsweise ist eine kontinuierliche, stufenlose Schrägung im Stator durch Verschränkung eines Lamellenpaketes, die jedoch einen aufwändigen Wickelprozess erfordert, oder eine kontinuierliche Schrägung im Rotor, beispielsweise durch eine geschrägte Magnetisierung eines Magnetringes, bekannt.

Außerdem können Magnete im Rotor eine gleichmäßig gestufte Schrägung ausbilden. Eine solche Anordnung kann durch mehrere gleichartige, mit Permanentmagneten besetzte Rotorsegmente erreicht werden, die gegeneinander verdreht sind, wobei Verdrehwinkel zwischen benachbarten Rotorsegmenten gleich groß sind. Als Annäherung an die kontinuierlichen Schrägungen werden üblicherweise mehr als zwei Rotorsegmente verwendet.

Beim Betrieb einer elektrischen Maschine mit einem Rotor ohne Schrägung wird ein Rastmoment erzeugt, das Schwankungen eines Drehmoments der elektrischen Maschine bewirkt. Durch die mechanische Verdrehung der Rotorsegmente zueinander werden beim Betrieb des Rotors Rastmomente der jeweiligen Rotorsegmente erzeugt, die phasenverschoben sind und einander überlagern. Das gesamte Rastmoment kann somit reduziert werden. Ein geeigneter Summenwinkel der Verdrehwinkel kann sogar eine Auslöschung der Grundordnung des Rastmoments bewirken und beeinflusst die Drehmomentwelligkeit unter Last.

Die Dokumente DE 10 2005 015 657 und DE 41 12 906 A1 offenbaren Beispiele eines Rotors, der aus zwei oder mehreren, mit Permanentmagneten besetzten Rotorsegmenten aufgebaut ist. Die Rotorsegmente sind so zueinander verdrehbar angeordnet, dass im Betrieb durch eine Verdrehung zwischen einer gleichmäßig gestuften Anordnung und einer geradlinigen Anordnung der Permanentmagnete des Rotors gewechselt werden kann.

Aus dem Dokument US 6,707,209 B2 ist ein Rotor für eine elektrische Maschine mit Permanentmagneten bekannt, welche eine Mehrzahl von axialen Rotorsegmenten aufweist. Jedes Rotorsegment enthält eine Mehrzahl von Permanentmagneten, und die Rotorsegmente sind mit einem Versatz in Umfangsrichtung zueinander angeordnet, so dass benachbarte Permanentmagnete jeweils eine stufenförmige Kontur ausbilden. Die stufenförmige Anordnung bewirkt bei der beschriebenen Magnetisierung der Permanentmagnete eine Verringerung des Magnetfeldes entlang der stufenförmigen Konturen.

Der Artikel von W. Fei et al. "A new technique of cogging torque suppression in direct-drive permanent magnet brushless machines", IEMDC 09, IEEE, Piscataway, NJ, USA, vom 3. Mai 2009, ISBN 978-1-4244-4251-5, befasst sich ebenfalls mit der Verringerung von Rastmomenten durch in axialer Richtung schrägversetzte Permanentmagnete ("skew") in einer besonderen Polpaarungstopologie.

Der Artikel von M. Gulec et al. "Magnet asymmetry in reduction of cogging torque for integer slot axial flux permament magnet motors", IET Electric Power Applications, IET, UK, 1. Mai 2014, ISSN 1751-8660, betrifft die Einführung von magnetischen Asymmetrien in Umfangsrichtung zur Verringerung des Rastmoments.

Die JP 2004 180491 A beschreibt eine elektrische Maschine mit Permanentmagneten, wobei sich auf dem Rotor vier Schichten mit Permanentmagneten befinden, welche in mit einer Schrägung angebracht sind und in einem Winkel von 30° bis 52° zueinander verschoben sind.

Die US 2010/052466 A1 offenbart eine Reduzierung der Drehmomentwelligkeit einer elektrischen Maschine. Dazu können die Magnetpole an der Oberfläche eines Rotors unterschiedlich schräg angeordnet werden, wobei auch mehrere unterschiedliche Schrägungswinkel verwendet werden können oder ein kontinuierlicher Verlauf der Grenzlinien zwischen den Polen realisiert werden kann.

In der US 2009/224619 A1 wird ein bürstenloser Motor beschrieben, welcher Magnetpole aufweist, die aus Segmentmagneten zusammengesetzt sind, wobei die Magnete von benachbarten Spalten mit einem Versatzwinkel (elektrischer Winkel) von 36° bis 57° versetzt sind.

Beim Betrieb bekannter elektrischer Maschinen treten akustische Geräusche auf, die durch eine Drehmomentwelligkeit hervorgerufen werden. Diese Geräusche werden von Fahrzeuginsassen unter Umständen als störend empfunden. Diese elektrischen Maschinen erfüllen somit die steigenden Anforderungen an den Fahrerkomfort nicht ausreichend.

Aufgabe der vorliegenden Erfindung ist es, einen Rotor einer elektrischen Maschine, eine elektrische Maschine mit einem solchen Rotor und ein Verfahren zum Herstellen eines solchen Rotors bereitzustellen, die die oben genannten Nachteile wenigstens teilweise überwinden.

Diese Aufgabe wird durch den erfindungsgemäßen Rotor nach Anspruch 1, die elektrische Maschine nach Anspruch 8 und das Verfahren zum Herstellen eines Rotors nach Anspruch 9 gelöst.

Gemäß einem ersten Aspekt betrifft die vorliegende Erfindung einen Rotor für eine elektrische Maschine, der eine Umfangsfläche und in einer Umfangsrichtung der Umfangsfläche in gleichmäßigen Abständen angeordnete Permanentmagnete aufweist, von denen senkrecht zur Umfangsrichtung benachbarte Permanentmagnete eine Permanentmagnetstruktur auf der Umfangsfläche bilden, wobei

eine sich senkrecht zu der Umfangsrichtung erstreckende Kontur der Permanentmagnetstruktur einen ersten treppenförmigen Abschnitt mit mehreren Stufen aufweist, wobei jede Stufe eine erste Ausdehnung, die im Wesentlichen senkrecht zur Umfangsrichtung ausgerichtet ist, und eine zweite Ausdehnung, die parallel zur Umfangsrichtung ausgerichtet ist und die erste Ausdehnung mit einer ersten Ausdehnung einer benachbarten Stufe verbindet, aufweist, wobei sich die erste Ausdehnung einer ersten Stufe von der ersten Ausdehnung einer zweiten, zur ersten Stufe benachbarten Stufe unterscheidet und/oder wobei

sich die zweite Ausdehnung einer ersten Stufe von der zweiten Ausdehnung der zweiten Stufe unterscheidet.

Gemäß einem zweiten Aspekt betrifft die vorliegende Erfindung eine elektrische Maschine mit einem Stator und mit einem Rotor nach dem ersten Aspekt.

Gemäß einem dritten Aspekt betrifft die vorliegende Erfindung ein Verfahren zum Herstellen eines Rotors einer elektrischen Maschine, insbesondere eines Rotors nach dem ersten Aspekt, umfassend:

Bereitstellen eines ersten Rotorsegments mit einer gekrümmten Oberfläche und einem an einer zur gekrümmten Oberfläche koaxial ausgerichteten Umfangsfläche angeordneten Permanentmagnetelement;

Bereitstellen eines zweiten Rotorsegments, das entsprechend oder ähnlich dem ersten Rotorsegment ausgebildet ist;

Anordnen des zweiten Rotorsegments auf das erste Rotorsegment, wobei das zweite Rotorsegment gegenüber dem ersten Rotorsegment um einen ersten Verdrehwinkel verdreht ist; Verbinden des zweiten Rotorsegments mit dem ersten Rotorsegment;

Bereitstellen eines dritten Rotorsegments, das entsprechend oder ähnlich dem ersten und dem zweiten Rotorsegment ausgebildet ist;

Anordnen des dritten Rotorsegments auf das zweiten Rotorsegment, wobei das dritte Rotorsegment gegenüber dem zweiten Rotorsegment um einen zweiten Verdrehwinkel, der sich von dem ersten Verdrehwinkel unterscheidet, verdreht ist; und Verbinden des dritten Rotorsegments mit dem zweiten Rotorsegment.

Weitere vorteilhafte Ausgestaltungen der Erfindung ergeben sich aus den Unteransprüchen und der folgenden Beschreibung bevorzugter Ausführungsbeispiele der vorliegenden Erfindung.

Ein erfindungsgemäßer Rotor für eine elektrische Maschine weist eine Umfangsfläche und eine Permanentmagnetstruktur auf der Umfangsfläche auf. Die Umfangsfläche kann eine Fläche sein, die beabstandet und koaxial zu einer umlaufenden Oberfläche des Rotors, auf die die Magnetstruktur wirkt, ausgerichtet ist, beispielsweise in einen Rotorkörper eingebettet ist, oder eine Fläche sein, die eine umlaufende Oberfläche des Rotors bildet. Die elektrische Maschine kann eine permanentmagneterregte Synchronmaschine, beispielsweise eine permanentmagneterregte Synchronmaschine mit Reluktanzanteil, sein. Die elektrische Maschine kann ein Traktionsantrieb sein. Die Permanentmagnetstruktur besitzt eine Kontur, die einen ersten treppenförmigen Abschnitt mit mehreren Stufen aufweist. Jede Stufe hat eine erste Ausdehnung, die im Wesentlichen senkrecht zu einer Umfangsrichtung der Umfangsfläche ausgerichtet ist, und eine zweite Ausdehnung, die parallel zu der Umfangsrichtung ausgerichtet ist und die erste Ausdehnung mit einer ersten Ausdehnung einer benachbarten Stufe verbindet. Die erste Ausdehnung einer ersten Stufe unterscheidet sich dabei von der ersten Ausdehnung einer zweiten, zur ersten Stufe benachbarten Stufe. Alternativ oder zusätzlich unterscheidet sich die zweite Ausdehnung einer ersten Stufe von der zweiten Ausdehnung der zweiten Stufe.

Die unterschiedlichen ersten und/oder der zweiten Ausdehnungen benachbarter Stufen resultieren in einer ungleichmäßigen Schrägung des treppenförmigen Abschnitts der Permanentmagnetstruktur. Die ungleichmäßige Schrägung führt zu einer effizienten Reduzierung der Drehmomentwelligkeit und damit der beim Betrieb der elektrischen Maschine entstehenden Geräusche. Die ungleichmäßige Schrägung des treppenförmigen Abschnitts führt somit dazu, dass eine Störung der Insassen durch störende Geräusche beim Betrieb der elektrischen Maschine durch den erfindungsgemäßen Rotor verringert wird und die akustischen Eigenschaften der elektrischen Maschine optimiert werden.

Beispielsweise haben benachbarte Stufen des treppenförmigen Abschnitts der Permanentmagnetstruktur gleiche erste Ausdehnungen und unterschiedliche zweite Ausdehnungen. Ein solcher treppenförmiger Abschnitt der Permanentmagnetstruktur kann mit Permanentmagnetelementen gleicher Form und Größe, beispielsweise standardisierten Permanentmagneten, oder mit gleichartigen Rotorsegmenten gleicher Form und Größe, in die Permanentmagnete eingebettet sind oder die mit Permanentmagneten besetzt sind, realisiert sein, wodurch zusätzlicher Aufwand für die Bereitstellung von Permanentmagnetelementen bzw. Rotorsegmenten unterschiedlicher Form und Größe vermieden wird. Alternativ können benachbarte Stufen unterschiedliche erste Ausdehnungen und gleiche zweite Ausdehnungen haben. Als weitere Alternative können benachbarte Stufen unterschiedliche erste Ausdehnungen und unterschiedliche zweite Ausdehnungen aufweisen.

Der treppenförmige Abschnitt ist erfindungsgemäß punktsymmetrisch ausgebildet, wobei ein Symmetriezentrum auf der Umfangsfläche in einer Symmetrieebene liegt, die parallel zur Umfangsrichtung ausgerichtet ist und durch eine Mitte der Umfangsfläche, beispielsweise eine Rotormitte, verläuft. Bei einem Rotor, der aus mehreren Rotorsegmenten zusammengesetzt ist, kann das Symmetriezentrum auf der Umfangsfläche beispielsweise in einer Symmetrieebene liegen, die parallel zur Umfangsrichtung ausgerichtet ist und in einer Mitte einer axialen Länge über alle Rotorsegmente (axiale Länge des Rotors) liegt. Beispielsweise kann das Symmetriezentrum in der Mitte der ersten Ausdehnung einer mittig angeordneten Stufe angeordnet sein und die zweite Ausdehnung der mittig angeordneten Stufe gleich der zweiten Ausdehnung einer benachbarten Stufe sein. Angrenzend an jede dieser Stufen kann je eine Stufe mit anderer zweiter Ausdehnung vorgesehen sein, wobei alle Stufen eine gleiche erste Ausdehnung besitzen. Alternativ kann das Symmetriezentrum in der Mitte der zweiten Ausdehnung einer mittig angeordneten Stufe angeordnet sein und die zweite Ausdehnung der mittig angeordneten Stufe kann sich von gleichen zweiten Ausdehnungen der zur mittig angeordneten Stufe benachbarten Stufen unterscheiden, wobei alle Stufen eine gleiche erste Ausdehnung besitzen.

Der Betrieb einer elektrischen Maschine kann einen motorischen Betrieb mit einer ersten Drehrichtung (Quadrant I), einen generatorischen Betrieb in die erste Drehrichtung (Quadrant II), einen generatorischen Betrieb in eine zweite, der ersten entgegengesetzte Drehrichtung (Quadrant III) und/oder einen motorischen Betrieb in die zweite Drehrichtung (Quadrant IV) umfassen. Die punktsymmetrische Ausbildung des treppenförmigen Abschnitts kann zu einer Optimierung der akustischen Eigenschaften der elektrischen Maschine, insbesondere einer in mehr als einem Quadranten betriebenen, elektrischen Maschine, führen. Es kann erreicht werden, dass bei motorischem und generatorischem Betrieb das gleiche akustische Verhalten der elektrischen Maschine vorliegt. Die punktsymmetrische Ausbildung des treppenförmigen Abschnitts kann somit vorzugsweise bei Traktionsantrieben, die in zwei oder gar allen vier Quadranten betrieben werden, zum Einsatz kommen.

Bei elektrischen Maschinen, die nur in einem Quadranten betrieben werden, können vollständig asymmetrische Ausgestaltungen des treppenförmigen Abschnitts zum Einsatz kommen, wodurch weiteres Zusatzpotenzial erreicht werden kann. Beispielsweise können die ersten und/oder zweiten Ausdehnungen aller Stufen komplett unterschiedlich sein.

Erfindungsgemäß hat jede Stufe eine erste Ausdehnung, die im Wesentlichen senkrecht zu der Umfangsrichtung der Umfangsfläche ausgerichtet ist. Unter dem Begriff "im Wesentlichen" ist hier jede Ausrichtung der ersten Ausdehnung zwischen einer Ausrichtung senkrecht zu der Umfangsrichtung und einer Ausrichtung, die um einen Schraubwinkel von 20° zu einer Senkrechten der Umfangsrichtung geneigt ist, zu verstehen. Beispielsweise kann die erste Ausdehnung senkrecht zur zweiten Ausdehnung ausgerichtet sein oder mit der zweiten Ausdehnung einen Winkel zwischen 70° und 110° einschließen.

Die Umfangsfläche kann die Form einer Mantelfläche eines Zylinders, insbesondere eines Kreiszylinders, aufweisen. Der Rotor kann als Innenläufer ausgebildet sein und eine kreiszylinderförmige Grundstruktur, in die die Umfangsfläche eingebettet ist, aufweisen, wobei die Umfangsfläche koaxial zu einer Mantelfläche der kreiszylinderförmigen Grundstruktur ausgerichtet ist. Ein als Innenläufer ausgebildeter Rotor kann auch eine kreiszylinderförmige Grundstruktur aufweisen, deren Mantelfläche die Umfangsfläche bildet, auf der die Permanentmagnetstruktur angebracht ist. Der Rotor kann alternativ als Außenläufer ausgebildet sein und eine Grundstruktur mit einer kreiszylinderförmigen Ausnehmung, beispielsweise eine hohlzylinderförmige Grundstruktur, in die die Umfangsfläche eingebettet ist, aufweisen, wobei die Umfangsfläche koaxial zu einer inneren Oberfläche der Grundstruktur ausgerichtet ist. Ein als Außenläufer ausgebildeter Rotor kann auch eine hohlzylinderförmige Grundstruktur aufweisen, deren innere Oberfläche die Umfangsfläche bildet, auf die die Permanentmagnetstruktur aufgebracht ist.

Die Permanentmagnetstruktur des erfindungsgemäßen Rotors kann mehrere Permanentmagnetelemente aufweisen. Jedes Permanentmagnetelement kann eine rechteckige, eine trapezförmige oder eine parallelogrammförmige Grundfläche besitzen. Die Permanentmagnetstruktur des erfindungsgemäßen Rotors kann mehrere Magnetpole aufweisen, die durch ein Permanentmagnetelement, das als Magnetpol wirkt, oder mehrere benachbarte Permanentmagnetelemente, die als Magnetpol wirken, gebildet sind. Beispielsweise können Permanentmagnetelemente zum Einsatz kommen, die eben ausgebildet sind und deren Unterseite lediglich bereichsweise an der Umfangsfläche anliegt. In manchen Ausführungsbeispielen können die Permanentmagnete eine rechteckige Grundfläche aufweisen und beabstandet von der Oberfläche angeordnet sein, wobei jeweils ein Permanentmagnetelement als Magnetpol wirkt. In manchen Beispielen können jeweils zwei, beispielsweise angewinkelt zueinander angeordnete, Permanentmagnete, die beabstandet von der Umfangsfläche angeordnet sind, einen Magnetpol bilden.

Alternativ oder zusätzlich kann jedes Permanentmagnetelement eine Krümmung aufweisen, die vorzugsweise eine Krümmung aufweist, die einer Krümmung der Umfangsfläche entspricht. Bei Rotoren mit einer Grundstruktur, deren Oberfläche die Umfangsfläche bildet, können die Permanentmagnete eine rechteckige Grundfläche aufweisen und eine Oberseite und eine Unterseite besitzen, wobei die Oberseite und die Unterseite jeweils entsprechend der Umfangsfläche gekrümmt sind und die Permanentmagnetelemente mit Ihrer Unterseite an der Umfangsfläche anliegen. Alternativ können die Permanentmagnetelemente eine gekrümmte Unterseite aufweisen, mit der sie an der Umfangsfläche anliegen, und eine beliebige Oberseite, die beispielsweise aus zwei zueinander geneigten ebene Oberflächen gebildet ist, aufweisen. Die Form der Permanentmagnetelemente ist jedoch nicht auf die genannten Beispiele beschränkt.

Der Rotor kann mehrere Rotorsegmente aufweisen, wobei jedes Rotorsegment eine gekrümmte Oberfläche, insbesondere eine umlaufende gekrümmte Oberfläche, besitzen kann. Die Oberfläche kann mehrere Ausnehmungen und/oder Vorsprünge enthalten oder glatt ausgebildet sein. Beispielsweise können die Rotorsegmente als Kreisscheiben oder Ringelemente ausgebildet sein, aus denen eine zylindrische Grundstruktur des Rotors gebildet werden kann. Die gekrümmten Oberflächen der Rotorsegmente sind dann koaxial zu der Umfangsfläche des Rotors, an der die Permanentmagnetelemente befestigt sind, ausgerichtet. Die Permanentmagnetelemente weisen vorzugsweise eine Ausdehnung senkrecht zur Umfangsrichtung auf, die kleiner als eine axiale Länge des Rotorsegments oder gleich der axialen Länge des Rotorsegments ist, vorzugsweise die höchstens um 10% der axialen Länge des Rotorsegments kleiner als die axiale Länge des Rotorsegments ist. Vorzugsweise sind die Rotorsegmente fest miteinander oder mit einem gemeinsamen Bauteil, beispielsweise einem Lagerelement, formschlüssig, kraftschlüssig und/oder stoffschlüssig verbunden, beispielsweise aufgeschrumpft, verklebt, verschraubt, vernietet oder verlötet.

Ein in oder auf einem Rotorsegment angeordnetes Permanentmagnetelement kann eine Stufe des treppenförmigen Abschnitts der Permanentmagnetstruktur repräsentieren. Dabei kann die erste Ausdehnung jeder Stufe einer axialen Länge des zugehörigen Rotorsegments entsprechen und die zweite Ausdehnung jeder Stufe durch eine Verdrehung des Rotorsegments dieses Permanentmagneten zu einem benachbarten Rotorsegment gegeben sein.

Die Rotorsegmente mit den Permanentmagnetelementen können zum Beispiel Lamellenpaketsegmente mit Magneten sein, die auch beim Rotoraufbau bekannter elektrischer Maschinen Anwendung finden. Dadurch können die akustischen Eigenschaften des Rotors bzw. der elektrischen Maschine optimiert werden, ohne das Grunddesign und das Industrialisierungskonzept verändern zu müssen.

Die Rotorsegmente mit den Permanentmagnetelementen eines einzelnen Rotors sind beispielsweise alle gleich geformt und tragen an identischen Stellen Permanentmagnetelemente. Der ungleichmäßige treppenförmige Abschnitt der Permanentmagnetstruktur kann beim Stapeln der Rotorsegmente durch verdrehen benachbarter Rotorsegmente geformt sein, so dass unterschiedliche zweite Ausdehnungen benachbarter Stufen entstehen. Dazu ist kein zusätzlicher Aufwand für das Bereitstellen unterschiedlicher Permanentmagnetelemente nötig, sondern lediglich ein Prozessparameter an einem Fügeroboter an die gewünschte Verdrehung anzupassen.

Alternativ können sich die axialen Längen der Rotorsegmente eines einzelnen Rotors voneinander abweichen, wodurch ein Rotor mit treppenförmigen Abschnitt erzeugt wird, dessen Stufen unterschiedliche erste Ausdehnungen aufweisen.

Das Stapeln und Verdrehen von Rotorsegmenten mit Permanentmagnetelementen zu einem Rotor findet beispielsweise bei der Herstellung von Rotoren für permanentmagneterregte Synchronmaschinen mit Reluktanzanteil Anwendung. Für Rotoren anderer elektrischer Maschinen kann eine andere Grundstruktur zugrunde gelegt werden, beispielsweise eine einteilige zylindrisch Grundstruktur, in die die Permanentmagnetstruktur eingebracht ist oder auf der die Permanentmagnetstruktur aufgebracht ist.

Der treppenförmige Abschnitt der Permanentmagnetstruktur kann eine Abmessung in Umfangsrichtung aufweisen, die sich über einen Kreisbogen mit einem Mittelpunktswinkel $\alpha$ (Summenwinkel a) erstreckt. Beispielsweise liegt die erste Ausdehnung einer an einem Rand der Umgangsfläche angeordneten Stufe auf einer Schnittebene, die eine Rotationsachse der Umfangsfläche und die Umfangsfläche schneidet, und die erste Ausdehnung einer an einem anderen, dem ersten Rand entgegengesetzten Rand angeordneten Stufe auf einer Schnittebene, die um einen Winkel $\alpha$ zu der ersten Schnittebene geneigt ist. Der Mittelpunktswinkel beeinflusst sowohl eine Drehmomenthöhe als auch die Drehmomentwelligkeit. Für den Mittelpunktswinkel kann gelten:

$$(I) \qquad \alpha = (360°/GO) \pm 0{,}3 * (360°/GO),$$

wobei GO eine Grundordnung der elektrischen Maschine ist, die definiert ist als kleinstes gemeinsames Vielfaches aus einer Nutzahl eines Stators der elektrischen Maschine und aus einer Polzahl des Rotors der elektrischen Maschine. In manchen Ausführungsbeispielen, denen eine Grundordnung von 48 zugrunde liegt, gilt für den Mittelpunktswinkel $\alpha$ = 6°. In diesem Fall kann im Vergleich zu größeren oder kleineren Mittelpunktswinkeln ein erhöhtes Drehmoment erreicht werden.

Die zweite Ausdehnung einzelner Stufen des treppenförmigen Abschnitts der Permanentmagnetstruktur kann eine Abmessung in Umfangsrichtung aufweisen, die sich über einen Kreisbogen mit einem Mittelpunktswinkel $\beta$ erstreckt. Der Mittelpunktswinkel $\beta$ kann mit dem Verdrehwinkel benachbarter Rotorsegmente verglichen werden. Für den Mittelpunktswinkel $\beta_i$ einer i-ten Stufe kann gelten:

$$(II) \qquad \beta_i = (\alpha / n) * af$$

und

$$(III) \qquad \sum \beta_i = \alpha,$$

wobei n die Anzahl an Stufen des Rotors und af ein Asymmetriefaktor ist, für den beispielsweise gilt: $0 \leq af \leq 4$. In manchen Ausführungsbeispielen kann der Rotor aus fünf gleichartigen Rotorsegmenten mit Magneten gebildet sein und der Summenwinkel α gleich 6° sein. Dann kann das erste Rotorsegment und das zweite Rotorsegment um β = 1°, das zweite und das dritte Rotorsegment um β = 2°, das dritte und das vierte Rotorsegment um β = 2° und das vierte und das fünfte Rotorsegment um β = 1° zueinander verdreht sein. In manchen Ausführungsbeispielen kann ein Rotor aus vier gleichartigen Rotorsegmenten mit Magneten gebildet sein und der Summenwinkel α gleich 5,7° sein. Dann kann das erste Rotorsegment und das zweite Rotorsegment (benachbart zum ersten Rotorsegment) sowie das dritte Rotorsegment und das vierte Rotorsegment (benachbart zum dritten Rotorsegment) um β = 2° und das zweite Rotorsegment und das dritte Rotorsegment (benachbart zum zweiten Rotorsegment) um β = 1,7° zueinander verdreht sein. Die Wahl des Winkels β für unterschiedliche Stufen des Rotors ist jedoch nicht auf die genannten Beispiele beschränkt.

Die Kontur der Permanentmagnetstruktur kann einen zweiten treppenförmigen Abschnitt aufweisen, dessen Form der Form des ersten treppenförmigen Abschnitts entspricht und der entlang der Umfangsrichtung gegenüber dem ersten Abschnitt verschoben ist. Diese kann beispielsweise durch Permanentmagnete mit rechteckiger, parallelogrammförmiger oder trapezförmiger Grundfläche, wie sie oben beschrieben sind, erreicht werden.

In manchen Ausführungsbeispielen kann der Rotor auf seiner Umfangsfläche eine Vielzahl an Permanentmagnetstrukturen aufweisen, die wie oben beschrieben, geformt sind. Dadurch kann ein weitgehend kontinuierlicher Lauf des Rotors und ein leiser und zuverlässiger Betrieb der elektrischen Maschine erreicht werden.

Die vorliegende Erfindung betrifft weiterhin eine elektrische Maschine mit einem Stator und mit einem Rotor, wie er voranstehend beschrieben ist. Die elektrische Maschine ist beispielsweise eine permanentmagneterregte Synchronmaschine sein. Der Rotor kann ein Innenläufer sein und innerhalb eines Stators, der eine kreiszylinderförmige Ausnehmung ausweist, gelagert sein. Alternativ kann der Rotor ein Außenläufer sein, der so gelagert ist, dass er um den Stator, der eine kreiszylindrische Form aufweist, drehbar ist.

Die vorliegende Erfindung betrifft weiterhin ein Kraftfahrzeug mit einer elektrischen Maschine, die einem Rotor, wie er oben beschrieben ist, umfasst. Das Kraftfahrzeug kann ein Elektrofahrzeug mit der erfindungsgemäßen elektrischen Maschine als einzigem Antrieb oder ein Hybridfahrzeug mit einer Verbrennungskraftmaschine und der elektrischen Maschine als Antriebe sein.

Die Erfindung betrifft weiter ein Verfahren zum Herstellen eines Rotors einer elektrischen Maschine, beispielsweise einer permanentmagneterregte Synchronmaschine. Der Rotor kann wie oben beschrieben geformt sein. Das erfindungsgemäße Verfahren umfasst das Bereitstellen eines ersten Rotorsegments mit einer gekrümmten Oberfläche und einem an einer zur gekrümmten Oberfläche koaxial ausgerichteten Umfangsfläche angeordneten Permanentmagnetelement, das Bereitstellen eines zweiten Rotorsegments, das entsprechend oder ähnlich dem ersten Rotorsegment ausgebildet ist, das Anordnen des zweiten Rotorsegments auf das erste Rotorsegment, wobei das zweite Rotorsegment gegenüber dem ersten Rotorsegment um einen ersten Verdrehwinkel verdreht ist, das Verbinden des zweiten Rotorsegments mit dem ersten Rotorsegment, das Bereitstellen eines dritten Rotorsegments, das entsprechend oder ähnlich dem ersten und dem zweiten Rotorsegment ausgebildet ist, das Anordnen des dritten Rotorsegments auf das zweiten Rotorsegment, wobei das dritte Rotorsegment gegenüber dem zweiten Rotorsegment um einen zweiten Verdrehwinkel, der sich von dem ersten Verdrehwinkel unterscheidet, verdreht ist, und das Verbinden des dritten Rotorsegments mit dem zweiten Rotorsegment.

Dadurch wird ein Rotor mit Rotorsegmenten bereitgestellt, die jeweils eine gekrümmten Oberfläche und ein Permanentmagnetelement, das an einer koaxial zur Oberfläche ausgerichteten, in dem jeweiligen Rotorsegment eingebetteten Umfangsfläche angeordnet ist. Die Permanentmagnetelemente formen eine Permanentmagnetstruktur, deren Kontur einen ersten treppenförmigen Abschnitt mit mehreren Stufen aufweist, wobei jede Stufe eine erste Ausdehnung, die im Wesentlichen senkrecht zu einer Umfangsrichtung der Umfangsfläche ausgerichtet ist, und eine zweite Ausdehnung, die parallel zu der Umfangsrichtung ausgerichtet ist und die erste Ausdehnung mit einer ersten Ausdehnung einer benachbarten Stufe verbindet, aufweist, wobei sich die zweite Ausdehnung einer ersten Stufe von der zweiten Ausdehnung einer zweiten zur ersten Stufe benachbarten Stufe unterscheidet.

Weitere Rotorsegmente können in entsprechender Weise ergänzt werden.

Das Bereitstellen der Rotorsegmente kann das Zuführen von vorgefertigten Rotorsegmenten, beispielsweise auf einem Förderband oder per Hand, zu einer Fügestation enthalten. Die vorgefertigten Rotorsegmente können gleichartig geformt sein, beispielsweise gleiche Dicke und gleichen Durchmesser haben, und an vergleichbaren Stellen Permanentmagnetelemente aufweisen. Alternativ können die Rotorsegmente unterschiedliche axiale Längen aufweisen. Das Bereitstellen der Rotorsegmente kann auch das Fertigen der Rotorsegmente enthalten. Das Anordnen der Rotorsegmente kann erfolgen, indem ein erstes Rotorsegment bereitgestellt wird und ein zweites Rotorsegment relativ zu dem ersten Rotorsegment verdreht auf das erste Rotorsegment gestapelt wird, so dass eine durch das erste Rotorsegment repräsentierte Stufe eine erste Ausdehnung aufweist. Anschließend kann ein drittes Rotorsegment relativ zu dem zweiten Rotorsegment verdreht auf das zweite Rotorsegment gestapelt werden, dass die durch das zweite Rotorsegment repräsentierte Stufe eine erste Ausdehnung aufweist, die sich von der ersten Ausdehnung der durch das erste Rotorsegment repräsentierten Stufe unterscheidet. Weitere Rotorsegmente können ergänzt werden, wobei die erste Ausdehnung der durch das dritte und jedes weitere Rotorsegment gebildeten Stufen der ersten Ausdehnung der durch das zweite Rotorsegment bestimmten Stufe entsprechen kann oder sich von dieser unterscheiden kann. Das Anordnen der Rotorsegmente kann mit Hilfe eines oder mehrerer Roboter, beispielsweise einem Fügeroboter, automatisch oder per Hand durchgeführt werden.

Das Verbinden der angeordneten Rotorsegmente untereinander oder mit einem gemeinsamen Bauteil kann mittels unterschiedlicher Verbindungstechniken erfolgen, beispielsweise durch Aufschrumpfen, Verkleben, Verschrauben, Vernieten und/oder Verlöten.

Die einzelnen Schritte können in unterschiedlicher Reihenfolge ausgeführt werden, beispielweise kann das Verbinden jeweils nach dem oder beim Anordnen des zweiten und jedes weiteren Rotorsegments erfolgen oder nachdem alle Rotorsegmente angeordnet sind.

Ausführungsbeispiele der Erfindung werden nun beispielhaft und unter Bezugnahme auf die beigefügten Zeichnungen beschrieben. Darin zeigt:

Fig. 1    schematisch eine perspektivische Ansicht eines erfindungsgemäßen Rotors mit Permanentmagnetelementen;

Fig. 2A    einen schematischen Querschnitt des Rotors;

Fig. 2B    einen vergrößert dargestellten abgewickelten Bereich des Rotors;

Fig. 3    eine Darstellung einer Drehmomentwelligkeit verschiedener Rotoren; und

Fig. 4    ein Flussdiagramm eines Verfahrens zum Herstellen des erfindungsgemäßen Rotors.

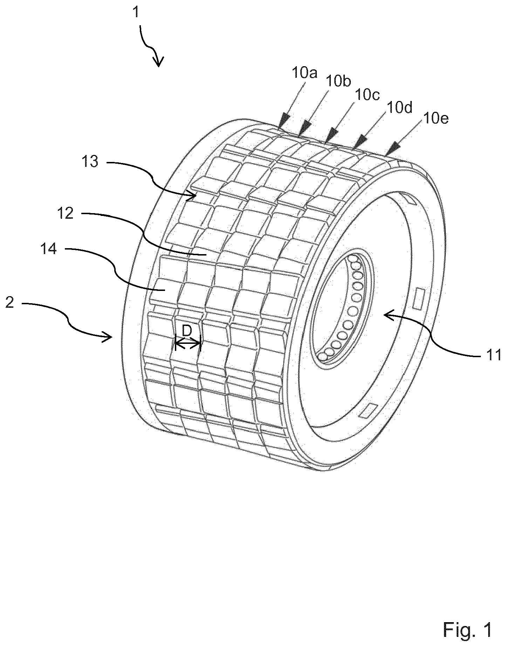

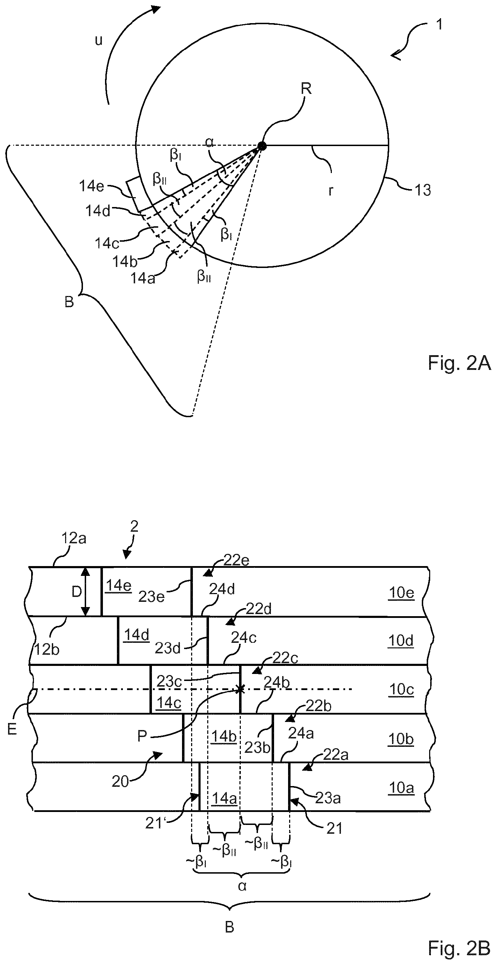

Ein Ausführungsbeispiel eines erfindungsgemäßen Rotors 1 ist in den Figuren 1, 2A und 2B gezeigt, wobei die Darstellung der Figuren 2A und 2B gegenüber der Darstellung der Fig. 1 wesentlich vereinfacht ist.

Der Rotor 1 weist eine zylinderförmige Grundstruktur auf, die durch fünf gleichartige ringförmige Rotorsegmente 10a-10e gebildet ist. Die Rotorsegmente 10a-10e sind über ein Lagerelement 11, das sich im Inneren der Rotorsegmente 10a-10e befindet und fest mit diesen verbunden ist, um diese zueinander zu fixieren. Mit Hilfe des Lagerelements 11 ist es möglich, dass der Rotor 1 in einer kreiszylinderförmigen Ausnehmung eines Stator (nicht gezeigt), der mehrere Spulen aufweise, gedreht werden kann.

Die Rotorsegmente 10a-10e besitzen eine umlaufende gekrümmte Oberfläche (nicht gezeigt) in Form einer äußeren Mantelfläche. Unter der gekrümmten Oberfläche befindet sich, koaxial zu dieser ausgerichtet, eine gekrümmte Umfangsfläche 12. Die Umfangsflächen 12 der fünf Rotorsegmente 10a-10e formen eine Gesamtumfangsfläche 13 des Rotors 1.

Auf der Umfangsfläche 12 jedes Rotorsegments 10a-10e ist eine vorbestimmte Anzahl an Permanentmagneten 14 in gleichmäßigen Abständen aufgebracht. Die Permanentmagnetelemente 14 sind von der gekrümmten Oberfläche der Rotorsegmente bedeckt und in die Rotorsegmente eingebettet. Die Anzahl an Permanentmagnetelementen 14 ist für alle Rotorsegmente 10a-10e konstant. Die Permanentmagnete 14 besitzen eine rechteckige Grundform, wobei eine Seitenlänge der Grundform einer axialen Länge D der Rotorsegmente 10a-10e entspricht. Die Permanentmagnetelemente 14 berühren mit ihrer Unterseite die Umfangsfläche 12 des zugehörigen Rotorsegments und erstrecken sich zwischen einer ersten Kante 12a zu einer zweiten Kante 12b der Umfangsfläche 12. Zwei Permanentmagnetelemente 14, die in Fig. 1 zueinander angewinkelt ausgerichtet sind und einen Magnetpol bilden, sind in den Figuren 2A und 2B vereinfacht als ein Element (Magnetpaar) dargestellt.

Jeweils ein Permanentmagnet 14 jedes Rotorsegments 10a-10b bilden eine Permanentmagnetstruktur 2. In der Permanentmagnetstruktur 2 sind die Permanentmagnetelemente 14 ungleichmäßig versetzt zueinander angeordnet. Die Permanentmagnetstruktur 2 wird nun mit Bezug auf Fig. 2B im Detail erläutert, wobei Fig. 2B den in Fig. 2A mit B bezeichneten Bereich des Rotors 1 vergrößert und abgewickelt dargestellt.

Die Permanentmagnetstruktur 2 besitzt eine Kontur 20, die zwei treppenförmige Abschnitte 21, 21' mit vier vollständigen Stufen 22a-22d und einer unvollständigen Stufe 22e aufweist. Jede vollständige Stufe 22a-22d besitzt eine erste Ausdehnung 23a-23d und eine zweite Ausdehnung 24a-24d. Die erste Ausdehnung 23a-23d ist senkrecht zu einer Umfangsrichtung der Umfangsfläche, die in Fig. 2A durch den Pfeil u angedeutet ist, bzw. parallel zu einer Rotationsachse des Rotors 1, die mit dem Bezugszeichen R angedeutet ist, ausgerichtet. Die zweite Ausdehnung 24a-24d ist parallel zu der Umfangsrichtung u ausgerichtet und verbindet die erste Ausdehnung 23a-23d mit einer ersten Ausdehnung 23b-23e einer benachbarten Stufe 22b-22e. Die zweiten Ausdehnung 24a, 24d der vollständigen Stufen 22a, 22d, die einander entsprechen, sind halb so groß wie die zweiten Ausdehnungen 24b, 24c der vollständigen Stufen 22b, 22c, die einander ebenfalls entsprechen. Die erste Ausdehnung (23a-23e) ist durch die axiale Länge D der Rotorsegmente 10a-10e festgelegt und für alle Stufen 22a-22e konstant.

Die beschriebene Permanentmagnetstruktur 2 entsteht, indem gleichartige Rotorsegmente 14, die an vergleichbaren Stellen Permanentmagnetelemente 14 aufweisen, gestapelt und gegeneinander verdreht verpresst werden. So ist das zweite Rotorsegment 10b (in Fig. 2A durch das Permanentmagnetelement 14b angedeutet) gegenüber dem ersten Rotorsegment 10a, das die erste Stufe 22a (in Fig. 2B die unterste Stufe) repräsentiert, um einen Verdrehwinkel βI = 1° verschoben. Damit ist die Länge der Ausdehnung der ersten Stufe 22a proportional zu βI. Das dritte Rotorsegment 10c ist gegenüber dem zweiten Rotorsegment 10b, das die zweite Stufe 22b repräsentiert, um einen Verdrehwinkel βII =2° verschoben, so dass die Länge der Ausdehnung der zweiten Stufe 22b proportional zu βII ist. Das vierte Rotorsegment 10d ist gegenüber dem dritten Rotorsegment 10c, das die dritte Stufe 22c repräsentiert, um einen Verdrehwinkel βII = 2° verschoben, so dass die Länge der Ausdehnung der dritten Stufe 22b wieder proportional zu βII ist. Das fünfte Rotorsegment 10e ist gegenüber dem vierten Rotorsegment 10d, das die vierte Stufe 22d repräsentiert, um einen Verdrehwinkel βI = 1° verschoben, so dass die Länge der Ausdehnung der vierten Stufe 22d proportional zu βI ist. Der treppenförmige Abschnitt 21 der beschriebenen Permanentmagnetstruktur 2 ist somit punktsymmetrisch zu dem Punkt P als Symmetriezentrum ausgebildet, der in einer Symmetrieebene E liegt, die parallel zur Umfangsrichtung u ausgerichtet ist und durch eine Mitte der Umfangsfläche 13 verläuft.

Der treppenförmige Abschnitt 21 überbrückt in Umfangsrichtung u eine Länge, die proportional zu dem Verdrehwinkel $\alpha$ des fünften Rotorsegments 10e gegenüber dem ersten Rotorsegment 10a geben ist, der im vorliegenden Ausführungsbeispiel a= 2* βI + 2* βII = 6° beträgt..

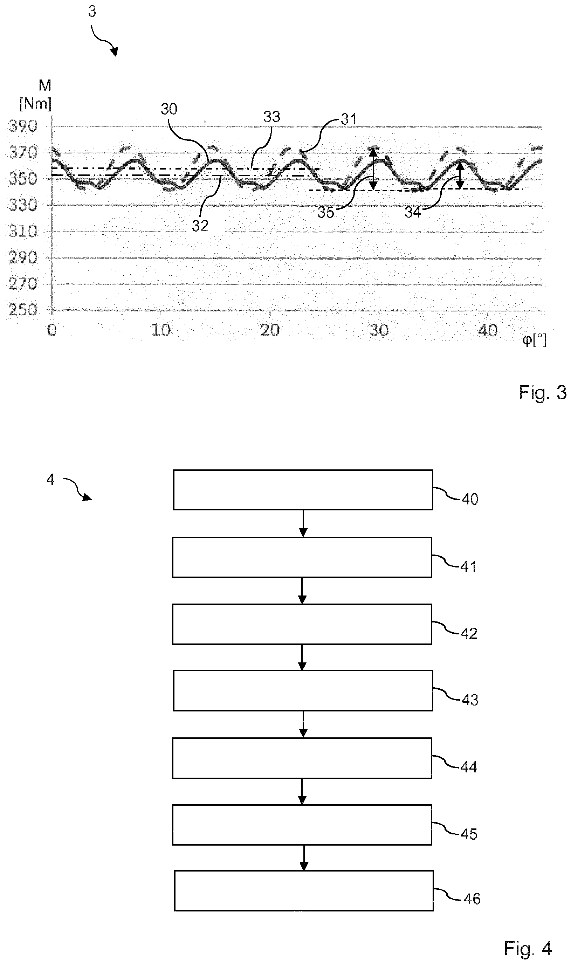

In Fig. 3 ist ein Diagramm 3 dargestellt, das einen oszillierenden Drehmomentverlauf 30 des mit Bezug auf die Figuren 1, 2A und 2B beschrienen Rotors 1 in Abhängigkeit von einer Rotorlage φ zeigt. Zum Vergleich ist ein oszillierender Drehmomentverlauf 31 eines Vergleichsrotors mit gleichmäßig gestuft angeordneten Permanentmagneten dargestellt, wobei benachbarte Rotorsegmente des Vergleichsrotors um jeweils im 1,5° zueinander verdreht sind. Ein mittleres Drehmoment 32 des Rotors 1 ist im Vergleich zu einem mittleren Drehmoment 33 des Vergleichsrotors reduziert. Gleichzeitig ist jedoch auch eine Welligkeit des Rotors 1, die durch die Amplitude 34 des Drehmomentverlaufs 30 gegeben ist, im Vergleich zu der Welligkeit des Vergleichsrotors, die durch die Amplitude 35 des Drehmomentverlaufs 31 gegeben ist, deutlich reduziert. Die reduzierte Welligkeit des Rotors 1 führen dazu, dass die elektrische Maschine im Betrieb weniger Geräusche absondert, als eine elektrische Maschine mit dem Vergleichsrotor, wobei die Drehmomenteinbußen sehr gering sind.

Fig. 4 zeigt ein Flussdiagramm eines erfindungsgemäßen Verfahrens 4 zum Herstellen eines Rotors 1. Bei 40 wird ein erstes Rotorsegment 10a mit einer gekrümmten Oberfläche und einem an einer zur gekrümmten Oberfläche 12 koaxial ausgerichteten Umfangsfläche angeordneten Permanentmagnetelement 14 bereitgestellt, indem das erste Rotorsegmente 10a über ein Förderband zu einer Fügestation mit einem Fügeroboter zugeführt wird und von dem Fügeroboter auf eine Ablagefläche gelegt wird.

Bei 41 wird ein zweites Rotorsegments 10b, das entsprechend dem ersten Rotorsegment 10a ausgebildet ist, bereitgestellt, indem das zweite Rotorsegmente 10b über das Förderband zu der Fügestation mit dem Fügeroboter zugeführt wird.

Bei 42 wird das zweite Rotorsegment 10b auf das erste Rotorsegment 10a angeordnet, wobei das zweite Rotorsegment 10b gegenüber dem ersten Rotorsegment 10a um einen ersten Verdrehwinkel βI = 1° verdreht ist. Dabei greift der Fügeroboter nach dem zweiten Rotorsegment 10b und verdreht das zweite Rotorsegment 10b um einen Verdrehwinkel βI = 1° zum ersten Rotorsegment 10a.

Bei 43 wird das zweite Rotorsegment 10b mit dem ersten Rotorsegment 10a verbunden. Dazu wird das zweite Rotorsegment 10b mit dem ersten Rotorsegment 10a verschrumpft.

Bei 44 wird ein zweites Rotorsegments 10b, das entsprechend dem ersten Rotorsegment 10a ausgebildet ist, bereitgestellt, indem das zweite Rotorsegmente 10b über das Förderband zu der Fügestation mit dem Fügeroboter zugeführt wird.

Bei 45 wird das dritte Rotorsegment 10c auf das zweite Rotorsegment 10b angeordnet, wobei das dritte Rotorsegment 10c gegenüber dem zweiten Rotorsegment 10b um einen ersten Verdrehwinkel βII = 2° verdreht ist. Dabei greift der Fügeroboter nach dem dritten Rotorsegment 10c und verdreht das dritte Rotorsegment 10c um einen Verdrehwinkel βII = 2° zum zweiten Rotorsegment 10b.

Bei 46 wird das dritte Rotorsegments 10c mit dem zweiten Rotorsegment 10a verschrumpft.

Mit diesem Verfahren werden die Rotorsegmente mit ihren Permanentmagnetelementen 14 so zueinander angeordnet, dass die Permanentmagnetstruktur 2, die oben im Detail beschrieben ist, entsteht.

Mit dem beschriebenen Verfahren können ohne großen Aufwand Rotoren mit unterschiedlich geformten ungleichmäßig gestuften Permanentmagnetstrukturen hergestellt werden, indem lediglich die Verdrehwinkel βI und βII durch Einstellung von Fügeparametern des Fügeroboters verändert werden.

**Bezugszeichenliste**

| | |
|---|---|
| 1 | Rotor |
| 10a-10b | ringförmiges Rotorsegment |
| 11 | Lagerelement |
| 12 | gekrümmte Oberfläche eines Rotorsegments |
| 12a | erste Kante des Rotorsegments |
| 12b | zweite Kante des Rotorsegments |
| 13 | Umfangsfläche des Rotors |
| 14, 14a-14e | Permanentmagnetelement |
| 2 | Permanentmagnetstruktur |
| 20 | Kontur |
| 21, 21' | treppenförmiger Abschnitt |

| | |
|---|---|
| 22a-22e | Stufe des treppenförmigen Abschnitts |
| 23a-23e | erste Ausdehnung der Stufen |
| 24a-24d | zweite Ausdehnung der Stufen |
| 3 | Diagramm |
| 30 | Drehmomentverlauf des Rotors 1 |
| 31 | Drehmomentverlauf des Vergleichsrotors |
| 32 | mittleres Drehmoment des Rotors 1 |
| 33 | mittleres Drehmoment des Vergleichsrotors |
| 34 | Amplitude des Drehmomentverlaufs 30 |
| 35 | Amplitude des Drehmomentverlaufs 31 |
| 4 | Verfahren zum Herstellen des Rotors |
| 40 | Bereitstellen eines ersten Rotorsegments |
| 41 | Bereitstellen eines zweiten Rotorsegments |
| 42 | Anordnen des zweiten Rotorsegments |
| 43 | Verbinden des ersten und des zweiten Rotorsegments |
| 44 | Bereitstellen eines dritten Rotorsegments |
| 45 | Anordnen des dritten Rotorsegments |
| 46 | Verbinden des zweiten und des dritten Rotorsegments |
| B | abgerollter Bereich |
| D | Segmentdicke |
| E | Symmetrieebene |
| $l_I$, $l_{II}$ | Länge der zweiten Ausdehnung |
| $l_{TA}$ | Länge der Gesamtverdrehung |
| M | Drehmoment |
| P | Punkt als Symmetriezentrum |
| R | Rotationsachse |
| r | Radius |
| u | Umfangsrichtung |
| $\alpha$ | Gesamtverdrehwinkel |
| $\beta_I$, $\beta_{II}$ | Verdrehwinkel einzelner Rotorsegmente |
| $\varphi$ | Rotorlage |

## Patentansprüche

1. Rotor (1) für eine elektrische Maschine, der eine Umfangsfläche (13) und in einer Umfangsrichtung der Umfangsfläche (13) in gleichmäßigen Abständen angeordnete Permanentmagnete (14) aufweist, von denen senkrecht zur Umfangsrichtung benachbarte Permanentmagnete (14) eine Permanentmagnetstruktur (2) auf der Umfangsfläche (13) bilden, wobei

    eine sich senkrecht zu der Umfangsrichtung (u), in eine axiale Richtung erstreckende Kontur (20) der Permanentmagnetstruktur (2) einen treppenförmigen Abschnitt (21) mit mehreren Stufen (22a-22d) aufweist, wobei jede Stufe (22a-22d) eine erste Ausdehnung (23a-23d), die im Wesentlichen senkrecht zu der Umfangsrichtung (u) ausgerichtet ist, und eine zweite Ausdehnung (24a-24d), die parallel zu der Umfangsrichtung (u) ausgerichtet ist und die erste Ausdehnung (23a-23d) durch eine zweite Ausdehnung (24a-24d) mit einer ersten Ausdehnung (23b-23e) einer benachbarten Stufe (22b-22e) verbindet, aufweist,
wobei sich eine Länge der ersten Ausdehnung (23a) einer ersten Stufe (22a) von einer Länge der ersten Ausdehnung (23b) einer zweiten, zur ersten Stufe (22a) benachbarten Stufe (22b) unterscheidet und/oder
sich eine Länge der zweiten Ausdehnung (24a) einer ersten Stufe (22a) von einer Länge der zweiten Ausdehnung (24b) der zweiten Stufe (22b) unterscheidet und der treppenförmige Abschnitt (21) punktsymmetrisch zu einem Punkt (P), als Symmetriezentrum, ausgebildet ist, wobei das Symmetriezentrum (P) der Querschnitt von der Treppenförmigen Abschnitt (21) und einer Symmetrieebene (E) die parallel zur Umfangsrichtung (u) ausgerichtet ist und durch eine Mitte der Umfangsfläche (13) verläuft, ist.

2. Rotor nach Anspruch 1, wobei die Permanentmagnetstruktur (2) mehrere Permanentmagnetelemente (14) aufweist.

3. Rotor nach Anspruch 2, wobei

    jedes Permanentmagnetelement (14) eine rechteckige, trapezförmige oder parallelogrammförmige Grundfläche besitzt und/oder wobei
    ein Permanentmagnetelement oder mehrere benachbarte Permanentmagnetelemente als Magnetpol wirken.

4. Rotor nach Anspruch 2 oder 3, wobei der Rotor (1) mehrere Rotorsegmente (10a-10e) mit jeweils einer gekrümmten Oberfläche aufweist, die fest miteinander verbunden sind, wobei die Umfangsfläche (13) koaxial zu den Oberflächen der Rotorsegmente (10a - 10e) angeordnet ist und wobei die Permanentmagnetelemente (14) in die Rotorsegmente eingebettet sind oder auf den Oberflächen der Rotorsegmente) befestigt sind.

5. Rotor nach Anspruch 4, wobei jedes Rotorsegment (10a-10e) eine Stufe (22a-22e) des treppenförmigen Abschnitts (21) repräsentiert, wobei die erste Ausdehnung (23a-23e) jeder Stufe (22a-22e) kleiner als eine axiale Länge (D) des zugehörigen Rotorsegments (10a-10e) oder gleich der axialen Länge (D) ist und die zweite Ausdehnung (24a-24d) jeder Stufe (22a-22d) durch eine Verdrehung ($\beta_I$, $\beta_{II}$) des zugehörigen Rotorsegments (10a-10d) zu einem benachbarten Rotorsegment (10b-10e) gegeben ist.

**6.** Rotor nach einem der Ansprüche 1 bis 5, wobei sich eine Abmessung des treppenförmigen Abschnitts (21) in Umfangsrichtung (u) über einen Kreisbogen mit einem Mittelpunktwinkel $\alpha$ erstreckt.

**7.** Rotor nach einem der Ansprüche 1 bis 6, wobei die Kontur (20) der Permanentmagnetstruktur (2) einen zweiten treppenförmigen Abschnitt (21') aufweist, dessen Form der Form des ersten treppenförmigen Abschnitts (21) entspricht und der entlang der Umfangsrichtung (u) gegenüber dem ersten treppenförmigen Abschnitt (21) verschoben ist.

**8.** Elektrische Maschine mit einem Stator und mit einem Rotor (1) nach einem der Ansprüche 1 bis 7.

**9.** Verfahren (4) zum Herstellen eines Rotors für eine elektrische Maschine, nach einem der Ansprüche 1 bis 7, umfassend:

Bereitstellen (40) eines ersten Rotorsegments (10a) mit einer gekrümmten Oberfläche und einem an einer zur gekrümmten Oberfläche koaxial ausgerichteten Umfangsfläche angeordneten Permanentmagnetelement (14);
Bereitstellen (41) eines zweiten Rotorsegments (10b), das entsprechend oder ähnlich dem ersten Rotorsegment (10a) ausgebildet ist;
Anordnen (42) des zweiten Rotorsegments (10b) auf das erste Rotorsegment (10a), wobei das zweite Rotorsegment (10b) gegenüber dem ersten Rotorsegment (10a) um einen ersten Verdrehwinkel ($\beta_I$) verdreht ist;
Verbinden (43) des zweiten Rotorsegments (10b) mit dem ersten Rotorsegment (10a);
Bereitstellen (4) eines dritten Rotorsegments (10c), das entsprechend oder ähnlich dem ersten und dem zweiten Rotorsegment (10a, 10b) ausgebildet ist;
Anordnen (45) des dritten Rotorsegments (10c) auf das zweite Rotorsegment (10b), wobei das dritte Rotorsegment (10c) gegenüber dem zweiten Rotorsegment (10b) um einen zweiten Verdrehwinkel ($\beta_{II}$), der sich von dem ersten Verdrehwinkel ($\beta_I$) unterscheidet, verdreht ist; und
Verbinden (46) des dritten Rotorsegments (10c) mit dem zweiten Rotorsegment (10b).

**Claims**

**1.** A rotor (1) for an electric machine, which rotor has a circumferential surface (13) and permanent magnets arranged in a circumferential direction of the circumferential surface (13) at uniform distances, of which perpendicular to the circumferential direction adjacent permanent magnet (14) form a permanent magnet structure (2) on the circumferential surface (13), wherein a contour (20) of the permanent magnet structure (2) extending perpendicular to the circumferential direction (u) in an axial direction has a stepped section (21) having a plurality of steps (22a-22d), wherein each step (22a-22d) has a first extent (23a-23d), which is oriented substantially perpendicularly to the circumferential direction (u), and a second extent (24a-24d), which is oriented parallel to the circumferential direction (u) and the first extent (23a-23d) connects through a second extent (24a-24d) with a first extent (23b-23e) of an adjacent step (22b-22e), wherein a length of the first extent (23a) of a first step (22a) differs from a length of the first extent (23b) of a second step (22b) adjacent to the first step (22a) and/or a length of the second extent (24a) of a first step (22a) differs from a length of the second extent (24b) of the second step (22b) and the stepped section (21) is formed point-symmetrically to a point (P), as the center of symmetry, wherein the symmetry center (P) is the cross section of the stepped section (21) and a symmetry plane (E), which is oriented parallel to the circumferential direction (u) and runs through a center of the circumferential surface (13).

**2.** The rotor according to Claim 1, wherein the permanent magnet structure (2) has a plurality of permanent magnet elements (14).

**3.** The rotor according to Claim 2, wherein each permanent magnet element (14) has a rectangular, trapezoidal or parallelogram-shaped base and/or wherein a permanent magnet element or a plurality of adjacent permanent magnet elements act as a magnetic pole.

**4.** The rotor according to Claim 2 or 3, wherein the rotor (1) has a plurality of rotor segments (10a-10e) in each case having a curved surface, which rotor segments are connected firmly with one another, wherein the circumferential surface (13) is arranged coaxially to the surfaces of the rotor segments (10a-10e) and wherein the permanent magnet elements (14) are embedded in the rotor segments or are mounted on the surfaces of the rotor segments.

**5.** The rotor according to Claim 4, wherein each rotor segment (10a-10e) represents a step (22a-22e) of the stepped section (21), wherein the first extent (23a-23e) of each step (22a-22e) is smaller than an axial length (D) of the associated rotor segment (10a-10e) or is equal to the axial length (D) and the second extent (24a-24d) of each step (22a-22d) is given to an adjacent rotor segment (10b-10e) by a rotation ($\beta_I$, $\beta_{II}$) of the associated rotor segment (10a-10d).

**6.** The rotor according to any one of Claims 1 to 5, wherein a dimension of the stepped section (21) extends in the circumferential direction (u) over a circular arc having a center angle $\alpha$.

7.  The rotor according to any one of Claims 1 to 6, wherein the contour (20) of the permanent magnet structure (2) has a second stepped section (21'), the shape of which corresponds to the shape of the first stepped section (21) and which is moved along the circumferential direction (u) relative to the first stepped section (21).

8.  The electric machine having a stator and having a rotor (1) according to any one of Claims 1 to 7.

9.  A method (4) for producing a rotor for an electric machine, according to any one of Claims 1 to 7, comprising:

    providing (40) a first rotor segment (10a) with a curved surface and a permanent magnet element (14) arranged on a circumferential surface oriented coaxially to the curved surface;
    providing (41) a second rotor segment (10b) which is designed correspondingly or similar to the first rotor segment (10a);
    arranging (42) the second rotor segment (10b) on the first rotor segment (10a), wherein the second rotor segment (10b) is rotated relative to the first rotor segment (10a) about a first angle of rotation ($\beta_I$);
    connecting (43) the second rotor segment (10b) to the first rotor segment (10a);
    providing (4) a third rotor segment (10c), which is designed correspondingly or similar to the first and the second rotor segment (10a, 10b);
    arranging (45) the third rotor segment (10c) on the second rotor segment (10b), wherein the third rotor segment (10c) is rotated relative to the second rotor segment (10b) about a second angle of rotation ($\beta_{II}$), which differs from the first angle of rotation ($\beta_I$); and
    connecting (46) the third rotor segment (10c) to the second rotor segment (10b).

**Revendications**

1.  Rotor (1) pour une machine électrique, qui comprend une surface circonférentielle (13) et des aimants permanents (14) disposés dans une direction circonférentielle de la surface circonférentielle (13) à des intervalles réguliers, dont des aimants permanents (14) adjacents perpendiculaires à la direction circonférentielle constituent une structure à aimants permanents (2) sur la surface circonférentielle (13), un contour (20) de la structure à aimants permanents (2), s'étendant perpendiculairement à la direction circonférentielle (u), dans une direction axiale, comprenant une portion à escaliers (21) avec plusieurs marches (22a-22d), chaque marche (22a-22d) présentant une première extension (23a-23d), qui est orientée globalement perpendiculairement à la direction circonférentielle (u) et une deuxième extension (24a-24d) qui est orientée parallèlement à la direction circonférentielle (u) et la première extension (23a-23d) étant reliée par une deuxième extension (24a-24d) avec une première extension (23b-23e) d'une marche adjacente (22b-22e),
    une longueur de la première extension (23a) d'une première marche (22a) étant différente d'une longueur de la première extension (23b) d'une deuxième marche (22b) adjacente à la première marche (22a) et/ou
    une longueur de la deuxième extension (24a) d'une première marche (22a) étant différente d'une longueur de la deuxième extension (24b) de la deuxième marche (22b) et la portion en escaliers (21) étant réalisée avec une symétrie ponctuelle par rapport à un point (P), en tant que centre de symétrie, le centre de symétrie (P) étant la section transversale de la portion en escaliers (21) et d'un plan de symétrie (E) qui est orienté parallèlement à la direction circonférentielle (u) et qui s'étend à travers un centre de la surface circonférentielle (13).

2.  Rotor selon la revendication 1, la structure à aimants permanents (2) comprenant plusieurs éléments à aimants permanents (14).

3.  Rotor selon la revendication 2, chaque élément à aimant permanent (14) présentant une surface de base rectangulaire, trapézoïdale ou en forme de parallélogramme et/ou un élément à aimant permanent ou plusieurs éléments à aimants permanents agissant comme un pôle magnétique.

4.  Rotor selon la revendication 2 ou 3, le rotor (1) comprenant plusieurs segments de rotor (10a-10e) avec chacun une surface courbée, qui sont reliés fermement entre eux, la surface circonférentielle (13) étant disposée de manière coaxiale par rapport aux surfaces des segments de rotor (10a-10e) et les éléments à aimants permanents (14) étant intégrés dans les segments de rotor ou fixés sur les surfaces des segments de rotor.

5.  Rotor selon la revendication 4, chaque segment de rotor (10a-10e) représentant une marche (22a-22e) de la portion en escaliers (21), la première extension (23a-23e) de chaque marche (22a-22e) étant inférieure à une longueur axiale (D) du segment de rotor (10a-10e) correspondant ou étant égale à la longueur axiale (D) et la deuxième extension (24a-24d) de chaque marche (22a-22d) étant données par une rotation ($\beta_I$, $\beta_{II}$) du segment de rotor (10a-10d) correspondant par rapport à segment de rotor (10b-10e) adjacent.

6. Rotor selon l'une des revendications 1 à 5, une dimension de la portion en escaliers (21) s'étendant dans la direction circonférentielle (u) sur un arc de cercle avec un angle central a.

7. Rotor selon l'une des revendications 1 à 6, le contour (20) de la structure à aimants permanents (2) comprend une deuxième portion en escaliers (21'), dont la forme correspond à celle de la première portion en escaliers (21) et qui est décalée le long de la direction circonférentielle (u) par rapport à la première portion en escaliers (21).

8. Machine électrique avec un stator et avec un rotor (1) selon l'une des revendications 1 à 7.

9. Procédé (4) de fabrication d'un rotor pour une machine électrique selon l'une des revendications 1 à 7, comprenant :

la mise à disposition (40) d'un premier segment de rotor (10a) avec une surface courbée et un élément à aimant permanent (14) disposé sur une surface circonférentielle orientée de manière coaxiale par rapport à la surface courbée ;
la mise à disposition (41) d'un deuxième segment de rotor (10b) qui est conçu de manière correspondante ou similaire au premier segment de rotor (10a) ;
la disposition (42) du deuxième segment de rotor (10b) sur le premier segment de rotor (10a), le deuxième segment de rotor (10b) étant tourné d'un angle de rotation ($\beta_I$) par rapport au premier segment de rotor (10a) ;
la liaison (43) du deuxième segment de rotor (10b) avec le premier segment de rotor (10a) ;
la mise à disposition (4) d'un troisième segment de rotor (10c), qui est conçu de manière correspondante ou similaire au premier et au deuxième segment de rotor (10a, 10b) ;
la disposition (45) du troisième segment de rotor (10c) sur le deuxième segment de rotor (10b), le troisième segment de rotor (10c) étant tourné par rapport au deuxième segment de rotor (10b) d'un deuxième angle de rotation ($\beta_{II}$) différent du premier angle de rotation ($\beta_I$) ; et
la liaison (46) du troisième segment de rotor (10c) avec le deuxième segment de rotor (10b).

1

10a 10b 10c 10d 10e

13

12

14

2

D

11

Fig. 1

Fig. 2A

Fig. 2B

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005015657
- DE 4112906 A1
- US 6707209 B2
- JP 2004180491 A
- US 2010052466 A1
- US 2009224619 A1

**In der Beschreibung aufgeführte Nicht-Patentliteratur**

- A new technique of cogging torque suppression in direct-drive permanent magnet brushless machines. **VON W. FEI et al.** IEMDC 09. IEEE
- Magnet asymmetry in reduction of cogging torque for integer slot axial flux permament magnet motors. **VON M. GULEC et al.** IET Electric Power Applications. IET